# EUROPEAN PATENT SPECIFICATION

(11) **EP 3 161 706 B1**
(45) Date of publication and mention of the grant of the patent: **27.02.2019**
(21) Application number: 15811435.5
(22) Date of filing: 27.05.2015
(51) Int. Cl.: G06F 21/10, G06F 21/73, G06Q 30/04, G06F 21/44, G06F 21/62, G06F 21/82, H04L 29/06

(54) **TECHNOLOGIES FOR SECURE OFFLINE ACTIVATION OF HARDWARE FEATURES**
TECHNOLOGIEN FÜR SICHERE OFFLINE-AKTIVIERUNG VON HARDWARE-MERKMALEN
TECHNOLOGIES POUR UNE ACTIVATION HORS LIGNE SÉCURISÉE D'ÉLÉMENTS MATÉRIELS

(30) Priority: 27.06.2014 US 201414318278
(43) Date of publication of application: 03.05.2017
(73) Proprietor: Intel Corporation, Santa Clara, CA 95054 (US)
(72) Inventor: STEVENS, JR., William A., Folsom, California 95630 (US); MARTINEZ, Alberto J., El Dorado Hills, CA 95762 (US); KATARIA, Mukesh, Santa Clara, CA 95051 (US); GOEL, Purushottam, Beaverton, Oregon 97006 (US); ABELS, Tim, Beaverton, Oregon 97006 (US); NATU, Mahesh S., Folsom, CA 95630 (US)
(74) Representative: Maiwald Patent- und Rechtsanwaltsgesellschaft mbH
(86) International application number: PCT/US2015/032568
(87) International publication number: WO 2015/199872

(56) References cited:
- WO-A1-2012/082459
- DE-A1-102006 054 830
- US-A1- 2003 097 444
- US-A1- 2005 149 733
- US-A1- 2005 258 955
- US-A1- 2013 003 970
- US-A1- 2014 044 265
- US-A1- 2014 090 051

## Description

### CROSS-REFERENCE TO RELATED U.S. PATENT APPLICATION

The present application claims priority to U.S. Utility Patent Application Serial No. 14/318,278, entitled "TECHNOLOGIES FOR SECURE OFFLINE ACTIVATION OF HARDWARE FEATURES," which was filed on June 27, 2014.

### BACKGROUND

Computer microchip products such as processors and chipsets are typically manufactured from a single die that includes a superset of all available hardware features. Each manufactured chip typically includes a number of hardware fuses that may be selectively blown to disable and/or enable certain hardware features. A chip vendor may create a variety of models of each chip design, known as stock-keeping units (SKUs), by binning the produced chips and by selectively enabling or disabling various hardware features using the hardware fuses.

A chip vendor typically sells chips or other components (e.g., processors and chipsets) to a number of original equipment manufacturers (OEMs) and/or original design manufacturers (ODMs), which incorporate the components into finished products such as computers or circuit boards. OEMs, ODMs, and/or other assemblers, manufacturers, or integrators (collectively referred to hereinafter as OEMs for clarity) typically assemble products using an assembly line located at a manufacturing facility. At several different times during the assembly process, completed or partially completed products may be powered up and otherwise tested to ensure quality.

Chip vendors may allow OEMs to configure components during assembly by contacting and authorizing with a secure server maintained by the chip vendor. Typically, contacting the secure server required either an active public network connection for each product produced on the assembly line or a connection to a dedicated, secure server appliance maintained by the chip vendor at the manufacturing facility. Maintaining secure server appliances at potentially numerous OEM manufacturing facilities around the world may be expensive, particularly because each secure server appliance has high uptime requirements and may require secure hardware to prevent malicious attacks in the field. United States Patent Application Publication US 2014/0044265 teaches the selective activation and/or deactivation of hardware features of an integrated circuit - and the composition of a digitally-signed attestation reflecting which hardware features have been activated or deactivated. German patent publication DE 10 2006 054 830 discloses the selective enabling and disabling of hardware features of an integrated circuit, using the mechanism of fuse blowing, in order to achieve built-to-order permanent customization of an integrated circuit chipset. It further teaches the usage of manufacturer-provided keys to track the usage of the features. Each key may relate to a single features or to multiple features tied to a SKU.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for secure offline hardware feature activation;
FIG. 2 is a simplified block diagram of at least one embodiment of various environments that may be established by the system of FIG. 1;
FIG. 3 is a simplified flow diagram of at least one embodiment of a method for assembly-line provisioning of a target computing device that may be executed by the target computing device of the system of FIGS. 1 and 2;
FIG. 4 is a simplified flow diagram of at least one embodiment of a method for hardware feature activation that may be executed by the target computing device of the system of FIGS. 1 and 2; and
FIG. 5 is a simplified flow diagram of at least one embodiment of a method for feature activation accounting that may be executed by a vendor computing device of the system of FIGS. 1 and 2.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C): (A and B); (A and C); (B and C); or (A, B, and C). Similarly, items listed in the form of "at least one of A, B, or C" can mean (A); (B); (C): (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

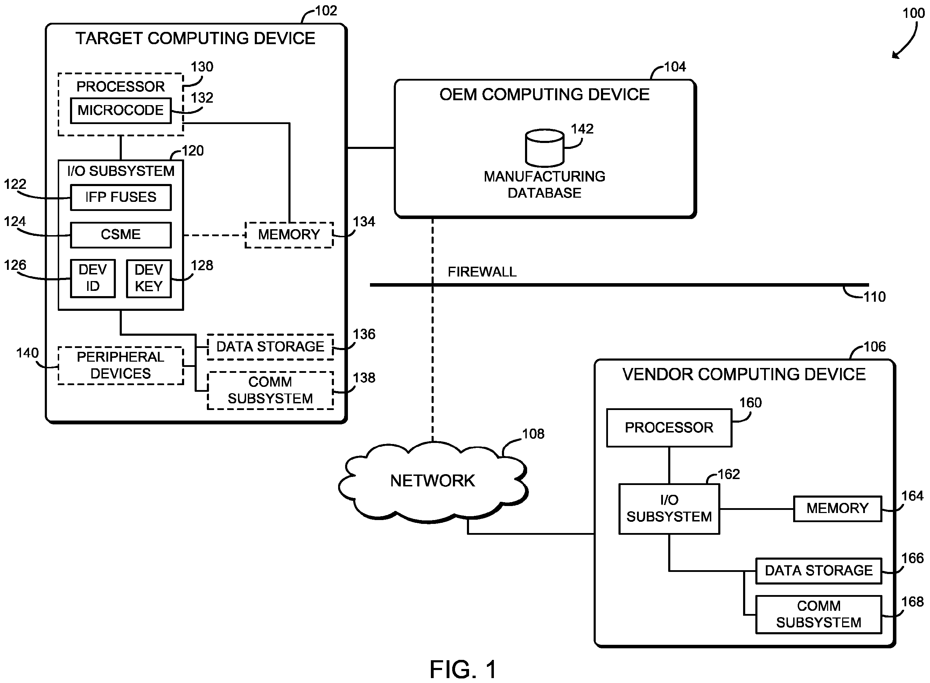

Referring now to FIG. 1, in an illustrative embodiment, a system 100 for secure offline hardware feature activation includes a target computing device 102, an original equipment manufacturer (OEM) computing device 104, and a vendor computing device 106. The OEM computing device 104 and the vendor computing device 106 may be in communication over a network 108, which may be filtered or otherwise secured by a firewall 110 maintained by the OEM. In use, as described in more detail below, the target computing device 102 is a complete or partially complete product assembled at an OEM manufacturing facility. The target computing device 102 includes a component designed by a component vendor that may run embedded firmware provided by the component vendor. During assembly, the OEM provides the target computing device 102 with a list of hardware features to activate. The feature request list is provided to a firmware execution element embedded inside the vendor-provided component of the target computing device 102, which activates the requested features and produces a digital receipt. The receipt identifies the activated hardware features, includes a unique device identifier (device ID) 126, and is signed using a unique device key 128. The device ID 126 and device key 128 are accessible only to the firmware execution element. The receipt is stored in a manufacturing database 142 accessible by the OEM computing device 104, which may be maintained behind the firewall 110 at the manufacturing facility. The OEM computing device 104 submits one or more signed receipts to the vendor computing device 106. The vendor computing device 106, using stored device ID 126 and device key 128 information, verifies the signature of the receipts, determines what features have been enabled on each target computing device 102, and calculates a price for each of those features. The vendor computing device 106 bills the OEM for the activated features, for example by submitting an invoice to the OEM computing device 104. The vendor computing device 106 may bill the OEM full price for target computing devices 102 for which there is no associated signed receipt, which may prevent cheating and other abuse.

Thus, the system 100 for offline hardware feature activation allows secure monitoring of the hardware features activated by an OEM, without requiring an active external network connection on the OEM assembly line and without requiring co-location of a secure server appliance at the OEM manufacturing facility. By allowing the OEM to activate hardware features, the component vendor may reduce the number of physical SKUs that must be produced, stored, sold, and shipped. The component vendor and the OEM may also better tailor the product mix of SKUs based on actual customer demand. In addition, the component vendor and the OEM may be able to charge for feature upgrades, thereby increasing revenue. Further, although the illustrative system 100 includes a single target computing device 102 and OEM computing device 104, it should be understood that in many embodiments the system 100 may include one or many OEM computing devices 104 corresponding to one or many target computing devices 102.

The target computing device 102 may be embodied as any type of fully or partially assembled computation or computer device capable of performing the functions described herein, including, without limitation, a motherboard, a mainboard, a system board, a logic board, a computer, a multiprocessor system, a server, a rack-mounted server, a blade server, a laptop computer, a notebook computer, a tablet computer, a wearable computing device, a network appliance, a web appliance, a distributed computing system, a processor-based system, and/or a consumer electronic device. As shown in FIG. 1, the target computing device 102 illustratively includes an I/O subsystem 120 and may, in some embodiments, include a processor 130, a memory 134, a data storage device 136, and a communication subsystem 138. For example, the target computing device 102 may be embodied as a motherboard including the I/O subsystem 120, and may include sockets, slots, ports, or other connectors to receive other components such as the processor 130, memory 134, and/or the data storage device 136. Of course, the target computing device 102 may include other or additional components, such as those commonly found in a computer (e.g., various input/output devices), in other embodiments. Additionally, in some embodiments, one or more of the illustrative components may be incorporated in, or otherwise form a portion of, another component. For example, the memory 134, or portions thereof, may be incorporated in the processor 130 in some embodiments.

The I/O subsystem 120 may be embodied as circuitry and/or components to facilitate input/output operations with the processor 130, the memory 134, and other components of the target computing device 102. For example, in the illustrative embodiment, the I/O subsystem 120 is embodied as a platform controller hub (PCH). Additionally or alternatively, the I/O subsystem 120 may be embodied as, or otherwise include, embedded controllers, processors, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 120 may form a portion of a system-on-a-chip (SoC) and be incorporated, along with the processor 130, the memory 134, and other components of the target computing device 102, on a single integrated circuit chip.

The I/O subsystem 120 includes a number of feature configuration devices. In the illustrative embodiments, the feature configuration devices are embodied as in-field programmable fuses (IFPs) 122. However, in other embodiments, the feature configuration devices may be embodied as other types devices and/or technologies capable of configuring the features of the target computing device 102 including, but not limited to any fuse, antifuse, or other component that may be configured to selectively enable or disable hardware features of the I/O subsystem 120, the processor 130, or other components of the target computing device 102. For example, the IFPs 122 may enable or disable particular features such as the base operating frequency, dynamic overclocking (e.g., Intel® Turbo Boost technology), end-user defined overclocking, usable cache memory size, processor core count, hyperthreading, virtualization support (for example, Intel@ VT-x technology), manageability features, or non-volatile memory support. As further described below, in some embodiments the target computing device 102 may include multiple banks, partitions, or other subdivisions of the IFPs 122 that may be used to configure the target computing device 102 multiple times. Although illustratively included in the I/O subsystem 120, in some embodiments the IFPs 122 may additionally or alternatively be included in other components of the target computing device 102 such as the processor 130 or an SoC including the processor 130. Additionally, although illustrated as fuses, in other embodiments the IFPs 122 may be embodied as any field-programmable element that may be used to enable or disable hardware features. For example, the IFPs 122 may be embodied as a non-volatile random access memory (NVRAM) device integrated in the processor 130, or as a discrete one-time programmable memory device.

The I/O subsystem 120 further includes a configuration engine 124. The configuration engine 124 may be embodied as any type of device capable of providing remote configuration, control, or management of the target computing device 102. In the illustrative embodiment, the configuration engine 124 is embodied as a converged security and manageability engine (CSME), but other devices and/or technologies may be used in other embodiments. The configuration engine 124 may include an out-of-band processor, embedded controller, or other computational element that is capable of securely executing firmware independent of the processor 130. As such, the configuration engine 124 may be capable of operating independently of the state of the rest of the target computing device 102. That is, the configuration engine 124 may be capable of operating regardless of the operating state of the processor 130, including when the target computing device 102 is powered off, when the target computing device 102 is executing a pre-boot firmware environment, when an operating system of the target computing device 102 is active, and when the operating system is crashed or otherwise inactive. The configuration engine 124 may also be capable of communicating using the communication subsystem 138 independently of the state of the target computing device 102, also known as "out-of-band" communication. In some embodiments, the configuration engine 124 may include a dedicated network adaptor for such out-of-band communication, in addition to, or instead of, connecting via the communication subsystem 138.

Additionally, the I/O subsystem 120 includes a device ID 126 and a device key 128. The device ID 126 may be embodied as any serial number, code, or other data that uniquely identifies each instance of the I/O subsystem 120. The device ID 126 may be provisioned by vendor at the time the I/O subsystem 120 is manufactured. Because the I/O subsystem 120 has a one-to-one relationship with the target computing device 102, the device ID 126 may also be used to uniquely identify the target computing device 102. The device key 128 may be embodied as any encryption key that is unique to the I/O subsystem 120. For example, the device key 128 may be embodied as a 128-bit symmetric key that is provisioned by the vendor at the time the I/O subsystem 120 is manufactured. Both the device ID 126 and the device key 128 may be stored in secure storage that is accessible to the I/O subsystem 120 but not to other components of the target computing device 102 such as the processor 130. For example, the device ID 126 and the device key 128 may be stored in dedicated firmware of the configuration engine 124.

The processor 130 may be embodied as any type of processor capable of performing the functions described herein. The processor 130 may be embodied as a single or multi-core processor(s), digital signal processor, microcontroller, or other processor or processing/controlling circuit. The processor 130 further includes microcode 132. The microcode 132 may be embodied as processor instructions or other firmware embedded in the processor 130 and not accessible to software executed by the processor 130. In some embodiments, the microcode 132 may perform configuration, control, or management functions similar to the configuration engine 124. The memory 134 may be communicatively coupled to a memory controller included in the processor 130, or in some embodiments, via the I/O subsystem 120. The memory 134 may be embodied as any type of volatile or non-volatile memory or data storage capable of performing the functions described herein. In operation, the memory 134 may store various data and software used during operation of the target computing device 102 such as operating systems, applications, programs, libraries, and drivers.

The data storage device 136 may be embodied as any type of device or devices configured for short-term or long-term storage of data such as, for example, memory devices and circuits, memory cards, hard disk drives, solid-state drives, or other data storage devices. The data storage device 136 may store operating system data, application data, or other data accessed by the target computing device 102.

The communication subsystem 138 of the target computing device 102 may be embodied as any communication circuit, device, or collection thereof, capable of enabling communications between the target computing device 102, the OEM computing device 104, and/or other remote devices. The target computing device 102 may communicate with the OEM computing device 104 over an internal network or direct communication link that is not connected to the Internet or other public network. The communication subsystem 138 may be configured to use any one or more communication technology (e.g., wired or wireless communications) and associated protocols (e.g., Ethernet, direct serial connection, Bluetooth®, Wi-Fi®, WiMAX, etc.) to effect such communication.

In some embodiments, the target computing device 102 may also include one or more peripheral devices 140. The peripheral devices 140may include any number of additional input/output devices, interface devices, and/or other peripheral devices. For example, in some embodiments, the peripheral devices 140 may include a display, touch screen, graphics circuitry, keyboard, mouse, speaker system, and/or other input/output devices, interface devices, and/or peripheral devices.

The OEM computing device 104 is configured to receive signed receipts from the target computing device 102, store the signed receipts in the manufacturing database 142, and submit those signed receipts across the network 108 to the vendor computing device 106. As shown in FIG. 1, the OEM computing device 104 is positioned behind the firewall 110 established by the OEM but is capable of connecting to the network 108. The OEM computing device 104 may be embodied as any type of computation or computer device capable of performing the functions described herein, including, without limitation, a computer, a multiprocessor system, a server, a rack-mounted server, a blade server, a laptop computer, a notebook computer, a tablet computer, a wearable computing device, a network appliance, a web appliance, a distributed computing system, a processor-based system, and/or a consumer electronic device. As such, the OEM computing device 104 may include components and features typically found in a server or other computing device. Such components and features, for example, may be similar to those of the target computing device 102, such as a processor, I/O subsystem, memory, data storage, communication circuitry, and various peripheral devices, which are not illustrated in FIG. 1 for clarity of the present description.

The vendor computing device 106 is configured to receive and validate signed receipts from the OEM computing device 104, calculate prices for activated hardware features, and bill the OEM for those features. The vendor computing device 106 may be embodied as any type of server computing device, or collection of devices, capable of performing the functions described herein. As such, the vendor computing device 106 may be embodied as a single server computing device or a collection of servers and associated devices. For example, in some embodiments, the vendor computing device 106 may be embodied as a "virtual server" formed from multiple computing devices distributed across the network 108 and operating in a public or private cloud. Accordingly, although the vendor computing device 106 is illustrated in FIG. 1 as embodied as a single server computing device, it should be appreciated that the vendor computing device 106 may be embodied as multiple devices cooperating together to facilitate the functionality described below. As such, the vendor computing device 106 may include components and features similar to the target computing device 102, such as a processor 160, I/O subsystem 162, memory 164, data storage 166, communication subsystem 168, and various peripheral devices. Those individual components of the vendor computing device 106 may be similar to the corresponding components of the target computing device 102, the description of which is applicable to the corresponding components of the vendor computing device 106 and is not repeated for clarity of the present description.

As discussed in more detail below, the OEM computing device 104 and the vendor computing device 106 may be configured to transmit and receive data with each other and/or other devices of the system 100 over the network 108. The network 108 may be embodied as any number of various wired and/or wireless networks. For example, the network 108 may be embodied as, or otherwise include, a wired or wireless local area network (LAN), a wired or wireless wide area network (WAN), a cellular network, and/or a publicly-accessible, global network such as the Internet. As such, the network 108 may include any number of additional devices, such as additional computers, routers, and switches, to facilitate communications among the devices of the system 100.

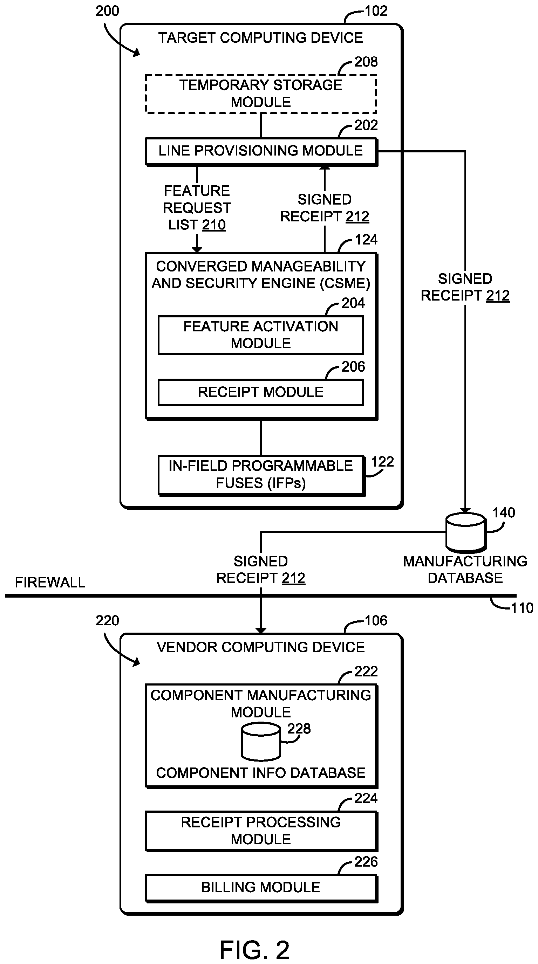

Referring now to FIG. 2, in an illustrative embodiment, the target computing device 102 establishes an environment 200 during operation. The illustrative environment 200 includes a line provisioning module 202, a feature activation module 204, a receipt module 206, and in some embodiments, a temporary storage module 208. The various modules of the environment 200 may be embodied as hardware, firmware, software, or a combination thereof. For example, the various modules of the environment 200 may form a portion of, or otherwise be established by, the I/O subsystem 120, the processor 130, and/or other hardware component of the target computing device 102.

The line provisioning module 202 is configured to determine which hardware features of the target computing device 102 to activate, and to submit a feature request list 210 that identifies those features to the configuration engine 124. The line provisioning module 202 is further configured to receive a signed receipt 212 from the configuration engine 124, and to store the signed receipt 212 in the manufacturing database 142. In some embodiments, the line provisioning module 202 may be configured as, or otherwise include, an application, script, or other code that may be executed by the processor 130 of the target computing device 102. The line provisioning module 202 may transmit the feature request list 210 and receive the signed receipt 212 using an interface between the configuration engine 124 and the other components of the target computing device 102.

In the illustrative embodiment, the feature activation module 204 and the receipt module 206 are embodied as firmware modules executed by the configuration engine 124. Additionally or alternatively, in some embodiments the feature activation module 204 and/or the receipt module 206 may also be embodied as firmware modules executed by other firmware execution elements of the target computing device 102, such as the microcode 132 of the processor 130. The feature activation module 204 is configured to receive the feature request list 210 over the interface between the configuration engine 124 and the other components of the target computing device 102, and to configure the in-field programmable fuses (IFPs) 122 to enabled and/or disable the hardware features specified by the feature request list 210. The receipt module 206 is configured to generate a digital receipt that includes an activated feature list that identifies the activated hardware features of the target computing device 102 and the device ID 126 of the I/O subsystem 120, and to sign that receipt with the device key 128 of the I/O subsystem 120. The receipt module 206 may be further configured to transmit the signed receipt 212 using the interface between the configuration engine 124 and the other components of the target computing device 102.

The temporary storage module 208, if present, is configured to temporarily store the hardware features that are to be activated by the target computing device 102. For example, the temporary storage module 208 may store the feature request list 210. In those embodiments, the line provisioning module 202 may be configured to retrieve the feature request list 210 from the temporary storage module 208, if available. In many embodiments, the temporary storage module 208 may store the feature request list 210 in a temporary storage device (not shown) that is always available, regardless of the operational state of the target computing device 102. For example, the temporary storage device may be embodied as a radiofrequency identification (RFID) tag.

Still referring to FIG. 2, in the illustrative embodiment, the vendor computing device 106 establishes an environment 220 during operation. The illustrative environment 220 includes a component manufacturing module 222, a receipt processing module 224, and a billing module 226. The various modules of the environment 220 may be embodied as hardware, firmware, software, or a combination thereof. For example, the various modules of the environment 220 may form a portion of, or otherwise be established by, the processor 160 or other hardware component of the vendor computing device 106.

The component manufacturing module 222 is configured to record the device ID 126 and the device key 128 associated with each I/O subsystem 120 that is manufactured by the vendor and/or shipped to the OEM. The component manufacturing module 222 may also store data for each I/O subsystem 120 to identify the OEM to which the I/O subsystem 120 was shipped. Additionally or alternatively, the component manufacturing module 222 may record aggregate data on the number of I/O subsystem 120 components shipped to each OEM. The component manufacturing module 222 may store the device ID 126, the device key 128, and/or any associated OEM information in a component information database 228. The component information database 228 may be stored or maintained by the vendor computing device 106, or may be accessible to the vendor computing device 106, for example over a network connection.

The receipt processing module 224 is configured to receive signed receipts 212 from the OEM, verify the signed receipts 212, and extract an associated activated feature list from each signed receipt 212. The receipt processing module 224 may receive the signed receipts 212 from a computing device located behind the firewall 110 of the OEM, such as the OEM computing device 104. The receipt processing module 224 may verify the signature of each signed receipt 212 using the device ID 126 and/or device key 128 stored in the component information database 228. In some embodiments, the receipt processing module 224 may also use the component information database 228 to determine if each OEM has returned the signed receipts 212 for every I/O subsystem 120 purchased by that OEM.

The billing module 226 is configured to determine a price associated with the activated feature list of each signed receipt 212, and to bill the OEM based on that price. The billing module 226 may use any technique for billing the OEM, including generating invoices for payment and/or issuing refunds or credits. In some embodiments, the billing module 226 may assign a maximum price to I/O subsystems 120 for which there is no associated signed receipt 212. In other words, the billing module 226 may charge OEMs a maximum price (e.g., the price for all available hardware features) for I/O subsystems 120 unless the OEM provides proof in the form of a signed receipt 212 that some hardware features of the target computing device 102 were not enabled during assembly.

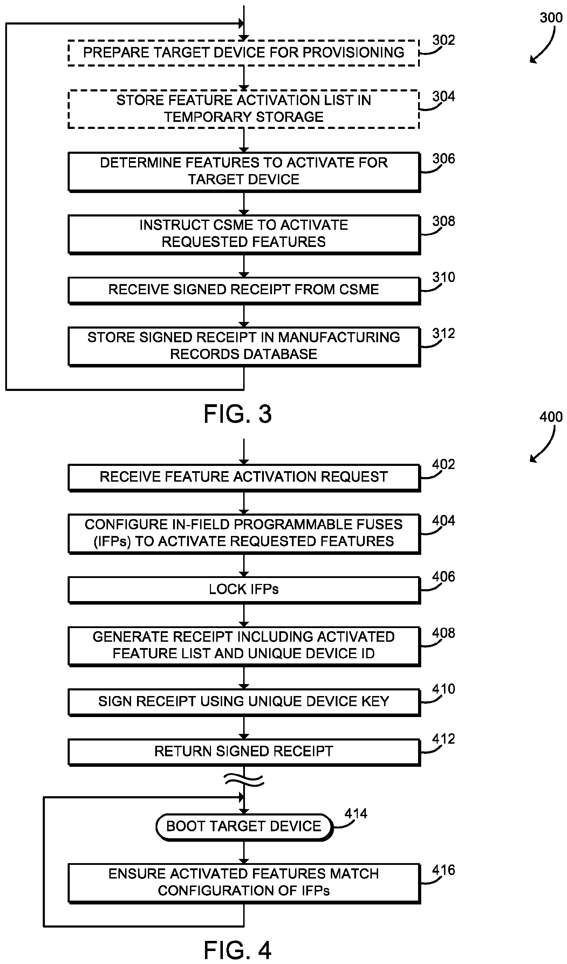

Referring now to FIG. 3, in use, the target computing device 102 may execute a method 300 for assembly-line provisioning of hardware features of the target computing device 102. The method 300 begins with block 302, in which the target computing device 102 may, in some embodiments, be prepared for provisioning. For example, in some embodiments the target computing device 102 may be embodied as a motherboard or a partially assembled computing device. In those embodiments, components such as the processor 130, memory 134, data storage device 136, communication subsystem 138, or peripheral devices 140 may be temporarily connected to the target computing device 102, for example by attaching a testing rig during the assembly process. After attaching the testing rig, the target computing device 102 may be capable of executing software or otherwise performing operations under the control of the OEM. In addition to physically preparing the target computing device 102 for use, the target computing device 102 may perform any other required initialization operations, such as loading an operating system, manufacturing script, or other software environment.

In block 304, in some embodiments, the target computing device 102 may store a feature request list 210 in temporary storage. The temporary storage may be non-volatile and available regardless of the operational state of the target computing device 102. For example, the temporary storage may be embodied as a radio frequency identification (RFID) tag that may be written to while the target computing device 102 is powered down. In those embodiments, the remainder of the method 300 may be completed at a later time, after the target computing device 102 is powered up.

In block 306, the target computing device 102 determines hardware features of the target computing device 102 to activate. As described above, hardware features may include any configurable hardware feature of the target computing device 102, such as the base operating frequency, dynamic overclocking (e.g., Intel® Turbo Boost technology), end-user defined overclocking, usable cache memory size, processor core count, hyperthreading, virtualization support (for example, Intel@ VT-x technology), manageability features, or non-volatile memory support. The features to activate may be provided to the target computing device 102 using a manufacturing script, a connection to the OEM computing device 104, manual input, or through any other technique. In some embodiments, the target computing device 102 may read the feature request list 210 from a temporary storage device such as an RFID tag. The hardware features to activate may be ultimately determined by the OEM for business purposes, such as maintaining stock levels of particular models, fulfilling customer orders, or other reasons. The target computing device 102 may build a feature request list 210 identifying the hardware features to activate.

In block 308, the target computing device 102 instructs the configuration engine 124 to activate the requested hardware features. The target computing device 102 may submit the feature request list 210 to any appropriate interface of the configuration engine 124. For example, in some embodiments, the feature request list 210 may be submitted using a manageability interface such as a host embedded controller interface (HECI) bus of the target computing device 102. Additionally or alternatively, in some embodiments the target computing device 102 may communicate with the configuration engine 124 using a network connection, for example using the communication subsystem 138. After submitting the request, the configuration engine 124 activates the requested hardware features, as described further below in connection with FIG. 4.

In block 310, the target computing device 102 receives a signed receipt 212 from the configuration engine 124. As described above, the signed receipt 212 includes an activated feature list describing the hardware features activated by the configuration engine 124 and includes the unique device ID 126 of the I/O subsystem 120. The signed receipt 212 is signed by the configuration engine 124 using the device key 128 of the I/O subsystem 120. The target computing device 102 may receive the signed receipt 212 using any appropriate interface with the configuration engine 124, such as the HECI bus or a network connection.

In block 312, the target computing device 102 stores the signed receipt 212 in the manufacturing database 142. The target computing device 102 may use any technique for storing the signed receipt 212 in the manufacturing database 142. For example, the target computing device 102 may submit the signed receipt 212 over an internal network connection to the OEM computing device 104, which in turn may manage the manufacturing database 142. As another example, the target computing device 102 may submit the signed receipt 212 over a direct connection to another computing device such as a test bench computer located on the assembly line. In that example, the test bench computer may store the signed receipt 212 in the manufacturing database 142 directly or communicate the signed receipt 212 to the OEM computing device 104. The target computing device 102 may not send the signed receipt 212 over a public or unprotected network such as the Internet, and thus may not require public network access during the assembly process.

After storing the signed receipt 212, in some embodiments the target computing device 102 may proceed to later stages of the assembly process, such as further assembly, quality assurance testing, or packaging. Any test rig or other components temporarily attached to the target computing device 102 may be removed prior to continuing the assembly process. In some embodiments, the method 300 may loop back to block 302 to perform additional assembly-line provisioning, for example if the target computing device 102 requires additional testing or further configuration. Additionally or alternatively, in some embodiments the method 300 may loop back to block 302 to provision a different target computing device 102. For example, the same test rig may be re-used with a new target computing device 102.

Referring now to FIG. 4, in use, the target computing device 102 may execute a method 400 for activating hardware features of the target computing device 102. In the illustrative embodiment, the method 400 is executed by the configuration engine 124 in response to a request to activate hardware features. In other embodiments, the method 400 may be executed by any firmware execution element of the target computing device 102, for example by the microcode 132 of the processor 130. Additionally or alternatively, in other embodiments, the configuration engine 124 may allow any software to enable the hardware features, but enforce that the enabled feature list matches the list of activated features. The method 400 begins with block 402, in which the target computing device 102 receives a feature activation request. The feature activation request may specify one or more hardware features to be activated. For example, the feature activation request may include a feature request list 210. The feature activation request may be received via any interface between the configuration engine 124 and the rest of the target computing device 102. For example, the feature activation request may be received via a manageability interface such as a host embedded controller interface (HECI) bus of the target computing device 102, or via a network connection.

In block 404, the target computing device 102 configures the IFPs 122 to activate the requested hardware features of the target computing device 102. For example, the configuration engine 124 may blow selected fuses of the IFPs 122 based on the contents of the feature request list 210. The target computing device 102 may perform any operation required to configure the IFPs 122. For example, in some embodiments, the microcode 132 of the processor 130 may write appropriate values into an integrated NVRAM device of the processor 130. As another example, in some embodiments, the target computing device 102 may write appropriate values to a one-time programmable memory device, after authenticating with the device using a passphrase. In block 406, after configuring the IFPs 122, the target computing device 102 locks the IFPs 122 to prevent future changes.

In block 408, the target computing device 102 generates a receipt including an activated feature list and the device ID 126. The activated feature list may identify all configurable hardware features that are active in the target computing device 102 (such as processor 130 features, I/O subsystem 120 features, and other features). The activated feature list may not be limited to those features included in the feature request list 210. For example, if the feature request list 210 is empty, the activated feature list of the receipt may identify all features of the target computing device 102 that are enabled by default. The receipt may be embodied in any appropriate digital format, including as a memory block, a file, or any other digital data.

In block 410, the target computing device 102 signs the receipt using the device key 128, producing the signed receipt 212. The target computing device 102 may sign the receipt using any cryptographic signature algorithm. Signing the receipt using the device key 128 may allow other entities (such as the vendor computing device 106) to verify that the signed receipt 212 was created by a particular target computing device 102, and that the contents of the signed receipt 212 have not been changed since being signed. In block 412, the target computing device 102 returns the signed receipt 212. The signed receipt 212 may be returned via the interface between the configuration engine 124 and the rest of the target computing device 102, such as the HECI bus or a network connection.

As described above in connection with FIG. 3, after returning the signed receipt 212, the assembly process of the target computing device 102 may be complete. After completion, the target computing device 102 may be shipped, stored, and/or sold to an end user. Thus, after some time, in block 414, the target computing device 102 may be booted. In some embodiments, the target computing device 102 may be booted after being purchased by an end user or other entity different from the OEM. After booting, in block 416, the target computing device 102 ensures the activated hardware features match the configuration of the IFPs 122. For example, during a pre-boot firmware environment, the configuration engine 124 may read the contents of the IFPs 122 and ensure that the components of the target computing device 102 are correctly configured. In many embodiments, the IFPs 122 may be embodied as hardware fuses that automatically enable or disable hardware features of the processor 130, the I/O subsystem 120, and/or other components of the target computing device 102. In some embodiments, the configuration engine 124 may actively configure components of the target computing device 102 such as the processor 130 and/or the I/O subsystem 120 based on the contents of the IFPs 122. Additionally or alternatively, the configuration engine 124 may verify that the configuration of the target computing device 102 matches the IFPs 122 and, if not, halt the target computing device 102 or otherwise indicate an error. In some embodiments, other firmware execution elements of the target computing device 102 (e.g., the microcode 132) may ensure the activated features match the configuration of the IFPs 122. After completing block 416, the method 400 loops back to block 414 to perform additional boot cycles.

In many embodiments, the method 400 is a one-time process used to provision the target computing device 102 during assembly. However, in some embodiments, the method 400 may be executed multiple times. For example, a particular target computing device 102 may be re-provisioned during assembly in response to quality testing, or as part of a refurbishment process. In those embodiments, the target computing device 102 may be provisioned to reduce the number of activate features or otherwise "downgrade" the target computing device 102. For example, the target computing device 102 may process a feature request list 210 including a subset of the hardware features that were previously activated by the target computing device 102. In those embodiments, the target computing device 102 may configure a different bank of IFPs 122 to enable the subset of features specified by the feature request list 210. The latest valid bank of IFPs 122 may determine the active hardware configuration of the target computing device 102.

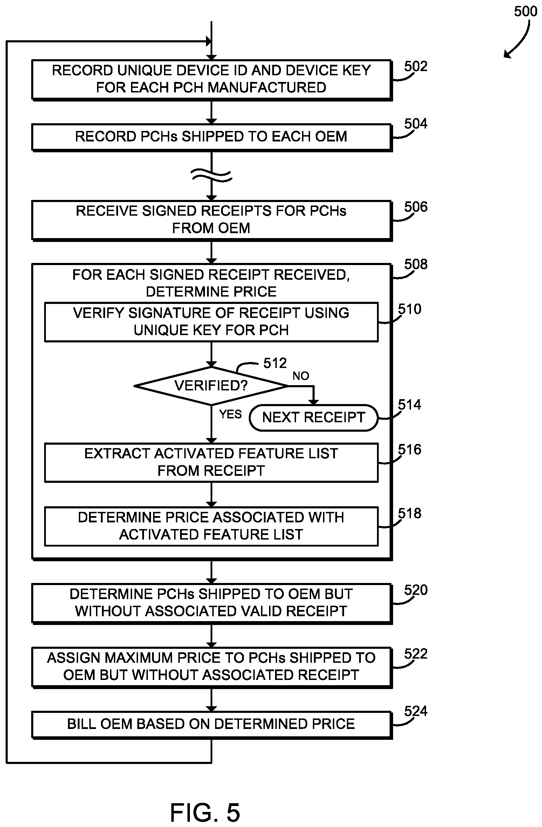

Referring now to FIG. 5, in use, the vendor computing device 106 may execute a method 500 for accounting for activated hardware features. The method 500 begins with block 502, in which the vendor computing device 106 records the unique device ID 126 and device key 128 for each I/O subsystem 120 manufactured by the vendor. The unique device ID 126 and the device key 128 may be stored in the component information database 228 maintained by the vendor computing device 106, for example during the manufacturing process of the I/O subsystem 120 or prior to shipping the I/O subsystem 120 to a customer. In block 504, the vendor computing device 106 records the I/O subsystems 120 that are shipped to each OEM or other customer. For example, the component information database 228 may associate each device ID 126 with the correct OEM using an OEM name or other identifier.

In block 506, after some time, the vendor computing device 106 receives one or more signed receipts 212 from an OEM. For example, the vendor computing device 106 may receive the signed receipts 212 submitted from the OEM computing device 104 via a web interface of the vendor computing device 106. The vendor computing device 106 may receive the signed receipts 212 periodically, for example at the end of each month or other billing period. Although illustrated as receiving signed receipts 212 from a single OEM, it should be understood that the vendor computing device 106 may receive signed receipts 212 from multiple OEMs.

In block 508, for each of the signed receipts 212 received, the vendor computing device 106 determines a price for the associated activated hardware features. In block 510, the vendor computing device 106 verifies the signature of the signed receipt 212, using the associated device key 128. The vendor computing device 106 may extract the device ID 126 from the signed receipt 212 and use the device ID 126 to retrieve the associated device key 128 from the component information database 228. The vendor computing device 106 may use any appropriate cryptographic signature algorithm to determine whether the signed receipt 212 was created by the identified I/O subsystem 120 and has not been modified since being created. In block 512, the vendor computing device 106 determines whether the signed receipt 212 was verified. If not, the method 500 branches to block 514, in which the vendor computing device 106 proceeds to process the next signed receipt 212. If the signed receipt 212 was verified, the method 500 proceeds to block 516.

In block 516, the vendor computing device 106 extracts the activated feature list from the signed receipt 212. As described above in connection with FIG. 4, the activated feature list may describe the configurable hardware features of the target computing device 102 that have been activated during assembly line provisioning. As described above, hardware features may include the base operating frequency, dynamic overclocking (e.g., Intel@ Turbo Boost technology), end-user defined overclocking, usable cache memory size, processor core count, hyperthreading, virtualization support (for example, Intel@ VT-x technology), manageability features, or non-volatile memory support. In block 518, the vendor computing device 106 determines a price associated with the activated feature list of the signed receipt 212. The price may be determined using pricing information available to the vendor computing device 106. After determining the price, the vendor computing device 106 may repeat the block 508 for the remaining signed receipts 212.

In block 520, the vendor computing device 106 determines the I/O subsystems 120 that were shipped to the OEM but for which the vendor computing device 106 has not received an associated valid signed receipt 212. The vendor computing device 106 may, for example, compare the signed receipts 212 to the component information database 228 to make that determination. In block 522, the vendor computing device 106 assigns a maximum price to the I/O subsystems 120 that were shipped to the OEM but are without an associated valid signed receipt 212. The maximum price may be equal to or greater than the total price for all available hardware features of the I/O subsystem 120. Thus, by assigning the maximum price, the vendor computing device 106 may financially encourage OEMs to return valid signed receipts 212 for all I/O subsystems 120 sold that do not enable every available hardware feature.

In block 524, the vendor computing device 106 bills the OEM based on the price determined for the I/O subsystems 120 shipped to that OEM, including the I/O subsystems 120 for which a valid signed receipt 212 was received and the I/O subsystems 120 for which no valid signed receipt 212 was received. The vendor computing device 106 may use any technique to bill the OEM. For example, the vendor computing device 106 may issue an invoice to the OEM based on the determined price. In some embodiments, for example if the OEM pre-paid for the I/O subsystems 120, the vendor computing device 106 may issue a refund or otherwise credit the account of the OEM based on the hardware features actually activated. The vendor computing device 106 may bill the OEM electronically, for example by transmitting the invoice to the OEM computing device 104, or through other techniques. After billing the OEM, the method 500 loops back to block 502 to account for additional I/O subsystems 120.

### EXAMPLES

Illustrative examples of the technologies disclosed herein are provided below. An embodiment of the technologies may include any one or more, and any combination of, the examples described below.
Example 1 includes a computing device for feature provisioning, the computing device comprising a feature configuration device to selectively enable one or more features of the computing device in response to an associated command; a feature activation module to (i) receive a feature request list via an interface with the computing device, wherein the feature request list is to identify zero or more features of the computing device to be enabled, and (ii) configure the feature configuration device to enable the zero or more features of the computing device identified by the feature request list; and a receipt module to (i) generate, in response to configuration of the feature configuration device, a digital receipt as a function of an activated feature list of the computing device and a unique device identifier accessible to the receipt module, and (ii) sign the digital receipt using a unique device key accessible to the receipt module.
Example 2 includes the subject matter of Example 1, and wherein the feature activation module is further to, in response to booting of the computing device identify a plurality of active features of the computing device; and ensure that the active features of the computing device correspond to the feature configuration device of the computing device.
Example 3 includes the subject matter of any of Examples 1 and 2, and wherein the receipt module is further to transmit the digital receipt via the interface with the computing device in response to signing of the digital receipt.
Example 4 includes the subject matter of any of Examples 1-3, and wherein the feature activation module is further to lock the feature configuration device after configuration of the feature configuration device to prevent changes to the feature configuration device.
Example 5 includes the subject matter of any of Examples 1-4, and wherein the feature request list identifies zero features of the computing device to be enabled; and to generate the digital receipt as a function of the activated feature list comprises to generate a digital receipt as a function of a default feature list of the computing device.
Example 6 includes the subject matter of any of Examples 1-5, and further comprising a configuration engine, wherein the configuration engine comprises the feature activation module and the receipt module.
Example 7 includes the subject matter of any of Examples 1-6, and wherein the configuration engine comprises an embedded controller of a chipset, a processor, or a system-on-a-chip of the computing device.
Example 8 includes the subject matter of any of Examples 1-7, and wherein the configuration engine comprises a converged security and manageability engine of a platform controller hub or a system-on-a-chip of the computing device.
Example 9 includes the subject matter of any of Examples 1-8, and wherein the configuration engine comprises microcode of a processor of the computing device.
Example 10 includes the subject matter of any of Examples 1-9, and further comprising a line provisioning module to transmit, via the interface with the configuration engine, the feature request list to the configuration engine of the computing device; receive, via the interface with the configuration engine, the signed digital receipt from the configuration engine; and store the signed digital receipt in a manufacturer database.
Example 11 includes the subject matter of any of Examples 1-10, and wherein the feature configuration device comprises a bank of in-field programmable fuses.
Example 12 includes the subject matter of any of Examples 1-11, and further comprising a chipset, wherein the bank of in-field programmable fuses is located in the chipset.
Example 13 includes the subject matter of any of Examples 1-12, and further comprising a processor or a system-on-a-chip, wherein the bank of in-field programmable fuses is located in the processor or the system-on-a-chip.
Example 14 includes the subject matter of any of Examples 1-13, and further comprising a processor including an integrated non-volatile memory, wherein the feature configuration device comprises the integrated non-volatile memory.
Example 15 includes the subject matter of any of Examples 1-14, and further comprising a chipset including an integrated non-volatile memory, wherein the feature configuration device comprises the integrated non-volatile memory.
Example 16 includes the subject matter of any of Examples 1-15, and wherein the feature configuration device comprises a one-time programmable memory device.
Example 17 includes the subject matter of any of Examples 1-16, and wherein the computing device comprises a computer system.
Example 18 includes the subject matter of any of Examples 1-17, and wherein the computing device comprises a motherboard.
Example 19 includes the subject matter of any of Examples 1-18, and further comprising a temporary storage device; and a temporary storage module to store the feature request list using the temporary storage device of the computing device; wherein to receive the feature request list comprises to receive the feature request list from the temporary storage device of the computing device.
Example 20 includes the subject matter of any of Examples 1-19, and wherein the temporary storage device comprises a radio frequency identification tag.
Example 21 includes the subject matter of any of Examples 1-20, and further comprising a second feature configuration device to selectively enable the one or more features of the computing device in response to an associated command, wherein the feature activation module is further to (i) receive a second feature request list via the interface with the computing device, wherein the second feature request list is to identify a subset of features of the computing device identified by the feature request list to be enabled, and (ii) configure the second feature configuration device to enable the subset of features of the computing device identified by the second feature request list; and the receipt module is further to (i) generate a second digital receipt as a function of a second activated feature list and the unique device identifier, and (ii) sign the second digital receipt using the unique device key.
Example 22 includes the subject matter of any of Examples 1-21, and wherein the feature configuration device comprises a first bank of in-field programmable fuses; and the second feature configuration device comprises a second bank of in-field programmable fuses.
Example 23 includes the subject matter of any of Examples 1-22, and further comprising a processor, wherein the device identifier and the device key are not accessible to software executed by the processor.
Example 24 includes the subject matter of any of Examples 1-23, and wherein the zero or more features of the computing device comprises one or more of a base operating frequency, a dynamic overclocking feature, an end-user overclocking feature, a cache memory size, a processor core count, a hyperthreading feature, a virtualization support feature, a manageability feature, or a non-volatile memory support feature.
Example 25 includes a computing device for feature activation accounting, the computing device comprising a component manufacturing module to record a unique device identifier and a unique device key associated with a computing device component; a receipt processing module to receive a signed digital receipt from an original equipment manufacturer, wherein the signed digital receipt is generated by a configuration engine of the computing device component as a function of an activated feature list of the computing device component and the device identifier of the computing device component, wherein the signed digital receipt is signed with the device key of the computing device component; verify a signature of the signed digital receipt using the device identifier and device key associated with the computing device component; and determine the activated feature list of each of the signed digital receipt in response to a verification of the signature of the signed digital receipt; and a billing module to determine a price associated with the activated feature list of the signed digital receipt; and bill the original equipment manufacturer as a function of the price associated with the signed digital receipt.
Example 26 includes the subject matter of any of Example 25, and wherein the component manufacturing module is further to record a second unique device identifier and a second unique device key associated with a second computing device component; the receipt processing module is further to determine that the second computing device component is associated with the original equipment manufacturer and is not associated with a signed digital receipt; and the billing module is further to (i) assign a predefined maximum price to the second computing device component in response to a determination that the second computing device component is associated with the original equipment manufacturer and is not associated with a signed digital receipt, and (ii) bill the original equipment manufacturer as a function of the predefined maximum price assigned to the second computing device component.
Example 27 includes the subject matter of any of Examples 25 and 26, and wherein the component manufacturing module is further to record a first number of computing device components shipped to the original equipment manufacturer; the receipt processing module is further to determine a second number of verified signed digital receipts received from the original equipment manufacturer; and the billing module is further to bill the original equipment manufacturer as a function of a predefined maximum price multiplied by the difference between the first number of computing device components less the second number of verified signed digital receipts.
Example 28 includes the subject matter of any of Examples 25-27, and wherein to bill the original equipment manufacturer comprises to generate an invoice as a function of the price associated with the signed digital receipt.
Example 29 includes the subject matter of any of Examples 25-28, and wherein to bill the original equipment manufacturer comprises to generate a credit as a function of the price associated with the signed digital receipt
Example 30 includes the subject matter of any of Examples 25-29, and wherein the computing device component comprises a processor, a chipset, or a system-on-a-chip, and the configuration engine comprises an embedded controller.
Example 31 includes the subject matter of any of Examples 25-30, and wherein the computing device component comprises a platform controller hub or a system-on-a-chip and the configuration engine comprises a converged security and manageability engine.
Example 32 includes the subject matter of any of Examples 25-31, and wherein the computing device component comprises a processor and the configuration engine comprises microcode of the processor.
Example 33 includes a method for feature provisioning, the method comprising receiving, by a configuration engine of a computing device, a feature request list via an interface with the computing device, wherein the feature request list is to identify zero or more features of the computing device to be enabled; configuring, by the configuration engine, a feature configuration device of the computing device to selectively enable the zero or more features of the computing device identified by the feature request list; generating, by the configuration engine in response to configuring the feature configuration device, a digital receipt as a function of an activated feature list of the computing device and a unique device identifier accessible to the configuration engine; and signing, by the configuration engine, the digital receipt using a unique device key accessible to the configuration engine.
Example 34 includes the subject matter of Example 33, and further comprising, in response to booting the computing device identifying, by the configuration engine, a plurality of active features of the computing device; and ensuring, by the configuration engine, that the active features of the computing device correspond to the feature configuration device of the computing device.
Example 35 includes the subject matter of any of Examples 33 and 34, and further comprising transmitting, by the configuration engine, the digital receipt via the interface with the computing device in response to signing the digital receipt.
Example 36 includes the subject matter of any of Examples 33-35, and further comprising locking, by the configuration engine, the feature configuration device after configuring the feature configuration device to prevent changing the feature configuration device.
Example 37 includes the subject matter of any of Examples 33-36, and wherein receiving the feature request list comprises receiving a feature request list identifying zero features of the computing device to be enabled; and generating the digital receipt as a function of the activated feature list comprises generating a digital receipt as a function of a default feature list of the computing device.
Example 38 includes the subject matter of any of Examples 33-37, and wherein the configuration engine comprises an embedded controller of a chipset, a processor, or a system-on-a-chip of the computing device.
Example 39 includes the subject matter of any of Examples 33-38, and wherein the configuration engine comprises a converged security and manageability engine of a platform controller hub or a system-on-a-chip of the computing device.
Example 40 includes the subject matter of any of Examples 33-39, and wherein the configuration engine comprises microcode of a processor of the computing device.
Example 41 includes the subject matter of any of Examples 33-40, and further comprising transmitting, by the computing device via the interface with the configuration engine, the feature request list to the configuration engine of the computing device; receiving, by the computing device via the interface with the configuration engine, the signed digital receipt from the configuration engine; and storing, by the computing device, the signed digital receipt in a manufacturer database.
Example 42 includes the subject matter of any of Examples 33-41, and wherein configuring the feature configuration device comprises configuring a bank of in-field programmable fuses of the computing device to enable the zero or more features of the computing device identified by the feature request list.
Example 43 includes the subject matter of any of Examples 33-42, and wherein configuring the bank of in-field programmable fuses comprises configuring a bank of in-field programmable fuses located in a chipset of the computing device.
Example 44 includes the subject matter of any of Examples 33-43, and wherein configuring the bank of in-field programmable fuses comprises configuring a bank of in-field programmable fuses located in a processor or a system-on-a-chip of the computing device.
Example 45 includes the subject matter of any of Examples 33-44, and wherein configuring the feature configuration device comprises configuring an integrated non-volatile memory of a processor of the computing device to enable the zero or more features of the computing device identified by the feature request list.
Example 46 includes the subject matter of any of Examples 33-45, and wherein configuring the feature configuration device comprises configuring an integrated non-volatile memory of a chipset of the computing device to enable the zero or more features of the computing device identified by the feature request list.
Example 47 includes the subject matter of any of Examples 33-46, and wherein configuring the feature configuration device comprises configuring a one-time programmable memory device of the computing device to enable the zero or more features of the computing device identified by the feature request list.
Example 48 includes the subject matter of any of Examples 33-47, and wherein the computing device comprises a computer system.
Example 49 includes the subject matter of any of Examples 33-48, and wherein the computing device comprises a motherboard.
Example 50 includes the subject matter of any of Examples 33-49, and further comprising storing, by the computing device, the feature request list using a temporary storage device of the computing device while the configuration engine is powered off; wherein receiving the feature request list comprises receiving the feature request list from the temporary storage device of the computing device.
Example 51 includes the subject matter of any of Examples 33-50, and wherein storing the feature request list in the temporary storage device comprises storing the feature request list using a radio frequency identification tag.
Example 52 includes the subject matter of any of Examples 33-51, and further comprising receiving, by the configuration engine, a second feature request list via the interface with the computing device, wherein the second feature request list is to identify a subset of features of the computing device identified by the feature request list to be enabled; configuring, by the configuration engine, a second feature configuration device of the computing device to selectively enable the subset of features of the computing device identified by the second feature request list; generating, by the configuration engine, a second digital receipt as a function of a second activated feature list of the computing device and the unique device identifier; and signing, by the configuration engine, the second digital receipt using the unique device key.
Example 53 includes the subject matter of any of Examples 33-52, and wherein configuring the feature configuration device comprises configuring a first bank of in-field programmable fuses of the computing device; and configuring the second feature configuration device comprises configuring a second bank of in-field programmable fuses of the computing device.
Example 54 includes the subject matter of any of Examples 33-53, and wherein the device identifier and the device key are not accessible to software executed by a processor of the computing device.
Example 55 includes the subject matter of any of Examples 33-54, and wherein the zero or more features of the computing device comprises one or more of a base operating frequency, a dynamic overclocking feature, an end-user overclocking feature, a cache memory size, a processor core count, a hyperthreading feature, a virtualization support feature, a manageability feature, or a non-volatile memory support feature.
Example 56 includes a method for feature activation accounting, the method comprising recording, by a computing device, a unique device identifier and a unique device key associated with a computing device component; receiving, by the computing device, a signed digital receipt from an original equipment manufacturer, wherein the signed digital receipt is generated by a configuration engine of the computing device component as a function of an activated feature list of the computing device component and the device identifier of the computing device component, wherein the signed digital receipt is signed with the device key of the computing device component; verifying, by the computing device, a signature of the signed digital receipt using the device identifier and the device key associated with the computing device component; determining, by the computing device, the activated feature list of signed digital receipt in response to verifying the signature of the signed digital receipt; determining, by the computing device, a price associated with the activated feature list of the signed digital receipt; and billing, by the computing device, the original equipment manufacturer as a function of the price associated with the signed digital receipt.
Example 57 includes the subject matter of Example 56, and further comprising recording, by the computing device, a second unique device identifier and a second unique device key associated with a second computing device component; determining, by the computing device, that the second computing device component is associated with the original equipment manufacturer and is not associated with a signed digital receipt; assigning, by the computing device, a predefined maximum price to the second computing device component in response to determining that the second computing device component is associated with the original equipment manufacturer and is not associated with a signed digital receipt; and billing, by the computing device, the original equipment manufacturer as a function of the predefined maximum price assigned to the second computing device component.
Example 58 includes the subject matter of any of Examples 56 and 57, and further comprising recording, by the computing device, a first number of computing device components shipped to the original equipment manufacturer; determining, by the computing device, a second number of verified signed digital receipts received from the original equipment manufacturer; and billing, by the computing device, the original equipment manufacturer as a function of a predefined maximum price multiplied by the difference between the first number of computing device components less the second number of verified signed digital receipts.
Example 59 includes the subject matter of any of Examples 56-58, and wherein billing the original equipment manufacturer comprises generating an invoice as a function of the price associated with the signed digital receipt.
Example 60 includes the subject matter of any of Examples 56-59, and wherein billing the original equipment manufacturer comprises generating a credit as a function of the price associated with the signed digital receipt.
Example 61 includes the subject matter of any of Examples 56-60, and wherein the computing device component comprises a processor, a chipset, or a system-on-a-chip, and the configuration engine comprises an embedded controller.
Example 62 includes the subject matter of any of Examples 56-61, and wherein the computing device component comprises a platform controller hub or a system-on-a-chip and the configuration engine comprises a converged security and manageability engine.
Example 63 includes the subject matter of any of Examples 56-62 and wherein the computing device component comprises a processor and the configuration engine comprises microcode of the processor.
Example 64 includes a computing device comprising a processor; and a memory having stored therein a plurality of instructions that when executed by the processor cause the computing device to perform the method of any of Examples 33-63.
Example 65 includes one or more machine readable storage media comprising a plurality of instructions stored thereon that in response to being executed result in a computing device performing the method of any of Examples 33-63.
Example 66 includes a computing device comprising means for performing the method of any of Examples 33-63.
Example 67 includes a computing device for feature provisioning, the computing device comprising means for receiving, by a configuration engine of a computing device, a feature request list via an interface with the computing device, wherein the feature request list is to identify zero or more features of the computing device to be enabled; means for configuring, by the configuration engine, a feature configuration device of the computing device to selectively enable the zero or more features of the computing device identified by the feature request list; means for generating, by the configuration engine in response to configuring the feature configuration device, a digital receipt as a function of an activated feature list of the computing device and a unique device identifier accessible to the configuration engine; and means for signing, by the configuration engine, the digital receipt using a unique device key accessible to the configuration engine.
Example 68 includes the subject matter of Example 67, and further comprising, in response to booting the computing device means for identifying, by the configuration engine, a plurality of active features of the computing device; and means for ensuring, by the configuration engine, that the active features of the computing device correspond to the feature configuration device of the computing device.
Example 69 includes the subject matter of any of Examples 67 and 68, and further comprising means for transmitting, by the configuration engine, the digital receipt via the interface with the computing device in response to signing the digital receipt.
Example 70 includes the subject matter of any of Examples 67-69, and further comprising means for locking, by the configuration engine, the feature configuration device after configuring the feature configuration device to prevent changing the feature configuration device.
Example 71 includes the subject matter of any of Examples 67-70, and wherein the means for receiving the feature request list comprises means for receiving a feature request list identifying zero features of the computing device to be enabled; and the means for generating the digital receipt as a function of the activated feature list comprises means for generating a digital receipt as a function of a default feature list of the computing device.
Example 72 includes the subject matter of any of Examples 67-71, and wherein the configuration engine comprises an embedded controller of a chipset, a processor, or a system-on-a-chip of the computing device.
Example 73 includes the subject matter of any of Examples 67-72, and wherein the configuration engine comprises a converged security and manageability engine of a platform controller hub or a system-on-a-chip of the computing device.
Example 74 includes the subject matter of any of Examples 67-73, and wherein the configuration engine comprises microcode of a processor of the computing device.
Example 75 includes the subject matter of any of Examples 67-74, and further comprising means for transmitting, via the interface with the configuration engine, the feature request list to the configuration engine of the computing device; means for receiving, via the interface with the configuration engine, the signed digital receipt from the configuration engine; and means for storing the signed digital receipt in a manufacturer database.
Example 76 includes the subject matter of any of Examples 67-75, and wherein the means for configuring the feature configuration device comprises means for configuring a bank of in-field programmable fuses of the computing device to enable the zero or more features of the computing device identified by the feature request list.
Example 77 includes the subject matter of any of Examples 67-76, and wherein the means for configuring the bank of in-field programmable fuses comprises means for configuring a bank of in-field programmable fuses located in a chipset of the computing device.
Example 78 includes the subject matter of any of Examples 67-77, and wherein the means for configuring the bank of in-field programmable fuses comprises means for configuring a bank of in-field programmable fuses located in a processor or a system-on-a-chip of the computing device.
Example 79 includes the subject matter of any of Examples 67-78, and wherein the means for configuring the feature configuration device comprises means for configuring an integrated non-volatile memory of a processor of the computing device to enable the zero or more features of the computing device identified by the feature request list.
Example 80 includes the subject matter of any of Examples 67-79, and wherein the means for configuring the feature configuration device comprises means for configuring an integrated non-volatile memory of a chipset of the computing device to enable the zero or more features of the computing device identified by the feature request list.
Example 81 includes the subject matter of any of Examples 67-80, and wherein the means for configuring the feature configuration device comprises means for configuring a one-time programmable memory device of the computing device to enable the zero or more features of the computing device identified by the feature request list.
Example 82 includes the subject matter of any of Examples 67-81, and wherein the computing device comprises a computer system.
Example 83 includes the subject matter of any of Examples 67-82, and wherein the computing device comprises a motherboard.
Example 84 includes the subject matter of any of Examples 67-83, and further comprising means for storing the feature request list using a temporary storage device of the computing device while the configuration engine is powered off; wherein the means for receiving the feature request list comprises means for receiving the feature request list from the temporary storage device of the computing device.
Example 85 includes the subject matter of any of Examples 67-84, and wherein the means for storing the feature request list in the temporary storage device comprises means for storing the feature request list using a radio frequency identification tag.
Example 86 includes the subject matter of any of Examples 67-85, and further comprising means for receiving, by the configuration engine, a second feature request list via the interface with the computing device, wherein the second feature request list is to identify a subset of features of the computing device identified by the feature request list to be enabled; means for configuring, by the configuration engine, a second feature configuration device of the computing device to selectively enable the subset of features of the computing device identified by the second feature request list; means for generating, by the configuration engine, a second digital receipt as a function of a second activated feature list of the computing device and the unique device identifier; and means for signing, by the configuration engine, the second digital receipt using the unique device key.
Example 87 includes the subject matter of any of Examples 67-86, and wherein the means for configuring the feature configuration device comprises means for configuring a first bank of in-field programmable fuses of the computing device; and the means for configuring the second feature configuration device comprises means for configuring a second bank of in-field programmable fuses of the computing device.
Example 88 includes the subject matter of any of Examples 67-87, and wherein the device identifier and the device key are not accessible to software executed by a processor of the computing device.
Example 89 includes the subject matter of any of Examples 67-88, and wherein the zero or more features of the computing device comprises one or more of a base operating frequency, a dynamic overclocking feature, an end-user overclocking feature, a cache memory size, a processor core count, a hyperthreading feature, a virtualization support feature, a manageability feature, or a non-volatile memory support feature.
Example 90 includes a computing device for feature activation accounting, the computing device comprising means for recording a unique device identifier and a unique device key associated with a computing device component; means for receiving a signed digital receipt from an original equipment manufacturer, wherein the signed digital receipt is generated by a configuration engine of the computing device component as a function of an activated feature list of the computing device component and the device identifier of the computing device component, wherein the signed digital receipt is signed with the device key of the computing device component; means for verifying a signature of the signed digital receipt using the device identifier and the device key associated with the computing device component; means for determining the activated feature list of signed digital receipt in response to verifying the signature of the signed digital receipt; means for determining a price associated with the activated feature list of the signed digital receipt; and means for billing the original equipment manufacturer as a function of the price associated with the signed digital receipt.
Example 91 includes the subject matter of Example 90, and further comprising means for recording a second unique device identifier and a second unique device key associated with a second computing device component; means for determining that the second computing device component is associated with the original equipment manufacturer and is not associated with a signed digital receipt; means for assigning a predefined maximum price to the second computing device component in response to determining that the second computing device component is associated with the original equipment manufacturer and is not associated with a signed digital receipt; and means for billing the original equipment manufacturer as a function of the predefined maximum price assigned to the second computing device component.
Example 92 includes the subject matter of any of Examples 90 and 91, and further comprising means for recording a first number of computing device components shipped to the original equipment manufacturer; means for determining a second number of verified signed digital receipts received from the original equipment manufacturer; and means for billing the original equipment manufacturer as a function of a predefined maximum price multiplied by the difference between the first number of computing device components less the second number of verified signed digital receipts.
Example 93 includes the subject matter of any of Examples 90-92, and wherein the means for billing the original equipment manufacturer comprises means for generating an invoice as a function of the price associated with the signed digital receipt.
Example 94 includes the subject matter of any of Examples 90-93, and wherein the means for billing the original equipment manufacturer comprises means for generating a credit as a function of the price associated with the signed digital receipt.
Example 95 includes the subject matter of any of Examples 90-94, and wherein the computing device component comprises a processor, a chipset, or a system-on-a-chip, and the configuration engine comprises an embedded controller.
Example 96 includes the subject matter of any of Examples 90-95, and wherein the computing device component comprises a platform controller hub or a system-on-a-chip and the configuration engine comprises a converged security and manageability engine.
Example 97 includes the subject matter of any of Examples 90-96, and wherein the computing device component comprises a processor and the configuration engine comprises microcode of the processor.

## Claims

1. A computing device for feature provisioning, the computing device comprising:
a feature configuration device to selectively enable one or more features of the computing device in response to an associated command;
a feature activation module to (i) receive a feature request list via an interface with the computing device, wherein the feature request list is to identify zero or more features of the computing device to be enabled, and (ii) configure the feature configuration device to enable the zero or more features of the computing device identified by the feature request list; a receipt module to (i) generate, in response to configuration of the feature configuration device, a digital receipt as a function of an activated feature list of the computing device and a unique device identifier accessible to the receipt module, and (ii) sign the digital receipt using a unique device key accessible to the receipt module; and
a processor, wherein the device identifier and the device key are not accessible to software executed by the processor, but are stored in a secure storage of a configuration engine that is not accessible to the processor but to an out-of-band processor, embedded controller, or other computational element that is capable of securely executing firmware independent of the processor, and wherein said configuration engine is further adapted to be capable of out-of-band communication independent of the state of the device.

2. The computing device of claim 1, wherein the feature activation module is further to, in response to booting of the computing device:
identify a plurality of active features of the computing device; and
ensure that the active features of the computing device correspond to the feature configuration device of the computing device.

3. The computing device of claim 1, further comprising a configuration engine, wherein the configuration engine comprises the feature activation module and the receipt module.

4. The computing device of claim 3, wherein the configuration engine comprises a converged security and manageability engine of a platform controller hub or a system-on-a-chip of the computing device.

5. The computing device of claim 1, wherein the feature configuration device comprises a bank of in-field programmable fuses.

6. The computing device of claim 1, further comprising a second feature configuration device to selectively enable the one or more features of the computing device in response to an associated command, wherein:
the feature activation module is further to (i) receive a second feature request list via the interface with the computing device, wherein the second feature request list is to identify a subset of features of the computing device identified by the feature request list to be enabled, and (ii) configure the second feature configuration device to enable the subset of features of the computing device identified by the second feature request list; and
the receipt module is further to (i) generate a second digital receipt as a function of a second activated feature list and the unique device identifier, and (ii) sign the second digital receipt using the unique device key.

7. The computing device of claim 1, wherein the zero or more features of the computing device comprises one or more of a base operating frequency, a dynamic overclocking feature, an end-user overclocking feature, a cache memory size, a processor core count, a hyperthreading feature, a virtualization support feature, a manageability feature, or a non-volatile memory support feature.

8. A method for feature provisioning, the method comprising:
receiving, by a configuration engine of the computing device, a feature request list via an interface with the computing device, wherein the feature request list is to identify zero or more features of the computing device to be enabled;
configuring, by the configuration engine, a feature configuration device of the computing device to selectively enable the zero or more features of the computing device identified by the feature request list;
generating, by the configuration engine in response to configuring the feature configuration device, a digital receipt as a function of an activated feature list of the computing device and a unique device identifier accessible to the configuration engine; signing, by the configuration engine, the digital receipt using a unique device key accessible to the configuration engine; and
wherein the device identifier and the device key are not accessible to software executed by a processor of the computing device, but are stored in a secure storage of a configuration engine that is not accessible to the processor of the computing device but to an out-of-band processor, embedded controller, or other computational element that is capable of securely executing firmware independent of the processor of the computing device, wherein the configuration engine is further adapted to be capable of out-of-band communication independent of the state of the device.

9. The method of claim 8, wherein the configuration engine comprises an embedded controller of a chipset, a processor, or a system-on-a-chip of the computing device.

10. The method of claim 8, wherein configuring the feature configuration device comprises configuring a bank of in-field programmable fuses of the computing device to enable the zero or more features of the computing device identified by the feature request list.

11. The method of claim 8, further comprising:
receiving, by the configuration engine, a second feature request list via the interface with the computing device, wherein the second feature request list is to identify a subset of features of the computing device identified by the feature request list to be enabled;
configuring, by the configuration engine, a second feature configuration device of the computing device to selectively enable the subset of features of the computing device identified by the second feature request list;
generating, by the configuration engine, a second digital receipt as a function of a second activated feature list of the computing device and the unique device identifier; and
signing, by the configuration engine, the second digital receipt using the unique device key.

12. The method of claim 8, wherein the zero or more features of the computing device comprises one or more of a base operating frequency, a dynamic overclocking feature, an end-user overclocking feature, a cache memory size, a processor core count, a hyperthreading feature, a virtualization support feature, a manageability feature, or a non-volatile memory support feature.

13. One or more machine readable storage media comprising a plurality of instructions stored thereon that in response to being executed result in a computing device performing the method of any of claims 8-12.

## Patentansprüche

1. Computervorrichtung zum Bereitstellen von Merkmalen, die Computervorrichtung umfassend:
eine Merkmalskonfigurationsvorrichtung zum selektiven Freigeben eines oder mehrerer Merkmale der Computervorrichtung in Reaktion auf einen zugeordneten Befehl;
ein Merkmalsaktivierungsmodul, um (i) eine Merkmalsanforderungsliste über eine Schnittstelle mit der Computervorrichtung zu empfangen, wobei die Merkmalsanforderungsliste dazu dient, null oder mehr freizugebenden Merkmale der Computervorrichtung zu identifizieren, und (ii) die Merkmalskonfigurationsvorrichtung zu konfigurieren, um die null oder mehr Merkmale der Computervorrichtung freizugeben, die durch die Merkmalsanforderungsliste identifiziert werden; ein Empfangsmodul, um (i) in Reaktion auf die Konfiguration der Merkmalskonfigurationsvorrichtung eine digitale Empfangsbestätigung als eine Funktion einer aktivierten Merkmalsliste der Computervorrichtung und einer eindeutigen Gerätekennung, die für das Empfangsmodul zugänglich ist, zu erzeugen, und (ii) die digitale Empfangsbestätigung unter Verwendung eines eindeutigen Geräteschlüssels, der für das Empfangsmodul zugänglich ist, zu signieren; und
einen Prozessor, wobei die Gerätekennung und der Geräteschlüssel nicht für von dem Prozessor ausgeführte Software zugänglich sind, sondern in einem sicheren Speicher einer Konfigurationsengine gespeichert werden, die für den Prozessor nicht zugänglich ist, sondern für einen Out-of-Band-Prozessor, eine eingebettete Steuerung oder ein anderes Berechnungselement, das fähig ist, Firmware unabhängig von dem Prozessor sicher auszuführen, und wobei die Konfigurationsengine ferner dazu vorgesehen ist, unabhängig von dem Zustand der Vorrichtung zur Out-of-Band-Kommunikation fähig zu sein.

2. Computervorrichtung nach Anspruch 1, wobei das Merkmalsaktivierungsmodul ferner dazu dient, in Reaktion auf das Starten der Computervorrichtung:
eine Vielzahl von aktiven Merkmalen der Computervorrichtung zu identifizieren; und
sicherzustellen, dass die aktiven Merkmale der Computervorrichtung der Merkmalskonfigurationsvorrichtung der Computervorrichtung entsprechen.

3. Computervorrichtung nach Anspruch 1, ferner umfassend eine Konfigurationsengine, wobei die Konfigurationsengine das Merkmalsaktivierungsmodul und das Empfangsmodul umfasst.

4. Computervorrichtung nach Anspruch 3, wobei die Konfigurationsengine eine zusammengeführte Sicherheits- und Manageability-Engine eines Plattform-Controller-Hubs oder eines System-on-a-Chip der Computervorrichtung umfasst.

5. Computervorrichtung nach Anspruch 1, wobei die Merkmalskonfigurationsvorrichtung eine Bank von programmierbaren Infield-Fuses umfasst.

6. Computervorrichtung nach Anspruch 1, ferner umfassend eine zweite Merkmalskonfigurationsvorrichtung zum selektiven Freigeben von dem einen oder den mehreren Merkmalen der Computervorrichtung in Reaktion auf einen zugeordneten Befehl, wobei:
das Merkmalsaktivierungsmodul ferner dazu dient, (i) eine zweite Merkmalsanforderungsliste über die Schnittstelle mit der Computervorrichtung zu empfangen, wobei die zweite Merkmalsanforderungsliste dazu dient, eine Teilmenge von Merkmalen der Computervorrichtung zu identifizieren, die durch die freizugebende Merkmalsanforderungsliste identifiziert werden, und (ii) die zweite Merkmalskonfigurationsvorrichtung zu konfigurieren, um die Teilmenge von Merkmalen der Computervorrichtung freizugeben, die durch die zweite Merkmalsanforderungsliste identifiziert werden; und
das Empfangsmodul ferner dazu dient, (i) eine zweite digitale Empfangsbestätigung als eine Funktion einer zweiten aktivierten Merkmalsliste und der eindeutigen Gerätekennung zu erzeugen und (ii) die zweite digitale Empfangsbestätigung unter Verwendung des eindeutigen Geräteschlüssels zu signieren.

7. Computervorrichtung nach Anspruch 1, wobei die null oder mehr Merkmale der Computervorrichtung eine oder mehrere der Folgenden umfassen: eine Grundtaktfrequenz, eine dynamische Übertaktungsfunktion, eine Endbenutzer-Übertaktungsfunktion, eine Cachespeichergröße, eine Prozessorkernanzahl, eine Hyperthreading-Funktion, eine Virtualisierungsunterstützungsfunktion, eine Manageability-Funktion oder eine Unterstützungsfunktion für nichtflüchtigen Speicher.

8. Verfahren zur Bereitstellung von Merkmalen, das Verfahren umfassend:
Empfangen, durch eine Konfigurationsengine der Computervorrichtung, einer Merkmalsanforderungsliste über eine Schnittstelle mit der Computervorrichtung, wobei die Merkmalsanforderungsliste dazu dient, null oder mehr Merkmale der freizugebenden Computervorrichtung zu identifizieren;
Konfigurieren, durch die Konfigurationsengine, einer Merkmalskonfigurationsvorrichtung der Computervorrichtung, um die null oder mehr Merkmale der Computervorrichtung selektiv freizugeben, die durch die Merkmalsanforderungsliste identifiziert werden;
Erzeugen, durch die Konfigurationsengine in Reaktion auf das Konfigurieren der Merkmalskonfigurationsvorrichtung, einer digitalen Empfangsbestätigung als eine Funktion einer aktivierten Merkmalsliste der Computervorrichtung und einer eindeutigen Gerätekennung, die für die Konfigurationsengine zugänglich ist;
Signieren, durch die Konfigurationsengine, der digitalen Empfangsbestätigung unter Verwendung eines eindeutigen Geräteschlüssels, der für die Konfigurationsengine zugänglich ist; und
wobei die Gerätekennung und der Geräteschlüssel nicht für eine von dem Prozessor der Computervorrichtung ausgeführte Software zugänglich sind, sondern in einem sicheren Speicher einer Konfigurationsengine gespeichert werden, die für den Prozessor der Computervorrichtung nicht zugänglich ist, sondern für einen Out-of-Band-Prozessor, eine eingebettete Steuerung oder ein anderes Berechnungselement, das fähig ist, Firmware unabhängig von dem Prozessor der Computervorrichtung sicher auszuführen, wobei die Konfigurationsengine ferner dazu vorgesehen ist, unabhängig von dem Zustand der Vorrichtung zur Out-of-Band-Kommunikation fähig zu sein.

9. Verfahren nach Anspruch 8, wobei die Konfigurationsengine eine eingebettete Steuerung eines Chipsatzes, eines Prozessors oder eines System-on-a-Chip der Computervorrichtung umfasst.

10. Verfahren nach Anspruch 8, wobei das Konfigurieren der Merkmalskonfigurationsvorrichtung das Konfigurieren einer Bank von programmierbaren Infield-Fuses der Computervorrichtung umfasst, um die null oder mehr Merkmale der Computervorrichtung freizugeben, die durch die Merkmalsanforderungsliste identifiziert werden.

11. Verfahren nach Anspruch 8, ferner umfassend:
Empfangen, durch die Konfigurationsengine, einer zweiten Merkmalsanforderungsliste über die Schnittstelle mit der Computervorrichtung, wobei die zweite Merkmalsanforderungsliste dazu dient, eine Teilmenge von Merkmalen der Computervorrichtung zu identifizieren, die durch die freizugebende Merkmalsanforderungsliste identifiziert werden;
Konfigurieren, durch die Konfigurationsengine, einer zweiten Merkmalskonfigurationsvorrichtung der Computervorrichtung, um die Teilmenge der Merkmale der Computervorrichtung selektiv freizugeben, die durch die zweite Merkmalsanforderungsliste identifiziert werden;
Erzeugen, durch die Konfigurationsengine, einer zweiten digitalen Empfangsbestätigung als eine Funktion einer zweiten aktivierten Merkmalsliste der Computervorrichtung und der eindeutigen Gerätekennung; und
Signieren, durch die Konfigurationsengine, der zweiten digitalen Empfangsbestätigung unter Verwendung des eindeutigen Geräteschlüssels.

12. Verfahren nach Anspruch 8, wobei die null oder mehr Merkmale der Computervorrichtung eine oder mehrere der Folgenden umfassen: eine Grundtaktfrequenz, eine dynamische Übertaktungsfunktion, eine Endbenutzer-Übertaktungsfunktion, eine Cachespeichergröße, eine Prozessorkernanzahl, eine Hyperthreading-Funktion, eine Virtualisierungsunterstützungsfunktion, eine Manageability-Funktion oder eine Unterstützungsfunktion für nichtflüchtigen Speicher.

13. Ein oder mehrere maschinenlesbare Speichermedien, die eine Vielzahl von darauf gespeicherten Anweisungen umfassen, die in Reaktion auf ihre Ausführung dazu führen, dass eine Computervorrichtung das Verfahren nach einem der Ansprüche 8 bis 12 durchführt.

## Revendications

1. Dispositif informatique pour la fourniture d'éléments, le dispositif informatique comprenant :
un dispositif de configuration d'éléments pour activer sélectivement un ou plusieurs éléments du dispositif informatique en réponse à une commande associée ;
un module d'activation d'éléments pour (i) recevoir une liste de demande d'éléments via une interface avec le dispositif informatique, la liste de demande d'éléments devant identifier zéro ou plusieurs éléments du dispositif informatique à activer, et (ii) configurer le dispositif de configuration d'éléments pour activer les zéro ou plusieurs éléments du dispositif informatique identifiés par la liste de demande d'éléments ; un module de réception pour (i) générer, en réponse à la configuration du dispositif de configuration des éléments, un reçu numérique en fonction d'une liste d'éléments activés du dispositif informatique et d'un identifiant de dispositif unique accessible au module de réception, et (ii) signer le reçu numérique en utilisant une clé de dispositif unique accessible au module de réception ; et
un processeur, l'identifiant de dispositif et la clé de dispositif n'étant pas accessibles au logiciel exécuté par le processeur, mais étant stockés dans un stockage sécurisé d'un moteur de configuration qui n'est pas accessible au processeur mais à un processeur hors bande, un dispositif de commande intégré ou un autre élément de calcul qui est capable d'exécuter en toute sécurité un microprogramme indépendant du processeur, et ledit moteur de configuration étant en outre adapté pour être capable de communiquer hors bande indépendamment de l'état du dispositif.

2. Dispositif informatique selon la revendication 1, le module d'activation d'éléments étant en outre, en réponse au démarrage du dispositif informatique, destiné à :
identifier une pluralité d'éléments actifs du dispositif informatique ; et
s'assurer que les éléments actifs du dispositif informatique correspondent au dispositif de configuration des éléments du dispositif informatique.

3. Dispositif informatique selon la revendication 1, comprenant en outre un moteur de configuration, le moteur de configuration comprenant le module d'activation d'éléments et le module de réception.

4. Dispositif informatique selon la revendication 3, le moteur de configuration comprenant un moteur de sécurité et de gestion combinées d'un concentrateur de dispositif de commande de plate-forme ou un système sur une puce du dispositif informatique.

5. Dispositif informatique selon la revendication 1, le dispositif de configuration d'éléments comprenant une banque de fusibles programmables dans le champ.

6. Dispositif informatique selon la revendication 1, comprenant en outre un second dispositif de configuration d'éléments pour activer sélectivement le ou les éléments du dispositif informatique en réponse à une commande associée,
le module d'activation d'éléments étant en outre destiné à (i) recevoir une deuxième liste de demande d'éléments via l'interface avec le dispositif informatique, la deuxième liste de demande d'éléments identifiant un sous-ensemble d'éléments du dispositif informatique identifiés par la liste de demande d'éléments à activer, et (ii) configurer le deuxième dispositif de configuration d'éléments pour activer le sous-ensemble d'éléments du dispositif informatique identifiés par la seconde liste de demande d'éléments ; et
le module de reçu devant en outre (i) générer un deuxième reçu numérique en fonction d'une deuxième liste d'éléments activés et de l'identifiant unique du dispositif, et (ii) signer le deuxième reçu numérique en utilisant la clé unique du dispositif.

7. Dispositif informatique selon la revendication 1, les zéro ou plusieurs éléments du dispositif informatique comprenant un ou plusieurs parmi une fréquence de fonctionnement de base, un élément de surcadençage dynamique, une élément de surcadençage de l'utilisateur final, une taille de mémoire cache, un nombre de noyaux de processeur, une élément d'hyperthreading, une élément de support de virtualisation, un élément de gestion ou un élément de support mémoire non volatile.

8. Procédé de fourniture d'éléments, le procédé comprenant :
la réception, par un moteur de configuration du dispositif informatique, d'une liste de demandes d'éléments via une interface avec le dispositif informatique, la liste de demandes d'éléments devant identifier zéro ou plusieurs éléments du dispositif informatique à activer ;
la configuration, par le moteur de configuration, d'un dispositif de configuration d'éléments du dispositif informatique pour activer sélectivement les zéro ou plusieurs éléments du dispositif informatique identifiés par la liste des demandes d'éléments ;
la génération, par le moteur de configuration en réponse à la configuration du dispositif de configuration d'éléments, d'un reçu numérique en fonction d'une liste d'éléments activés du dispositif informatique et d'un identifiant unique du dispositif accessible au moteur de configuration ; la signature, par le moteur de configuration, du reçu numérique au moyen d'une clé de dispositif unique accessible au moteur de configuration ; et
l'identifiant de dispositif et la clé de dispositif n'étant pas accessibles à un logiciel exécuté par un processeur du dispositif informatique, mais étant stockés dans un stockage sécurisé d'un moteur de configuration qui n'est pas accessible au processeur du dispositif informatique mais à un processeur hors bande, un dispositif de commande intégré ou un autre élément de calcul qui est capable d'exécuter en sécurité un microprogramme indépendant du processeur du dispositif informatique, le moteur de configuration étant en outre adapté pour pouvoir communiquer hors bande indépendamment de l'état du dispositif.

9. Procédé selon la revendication 8, le moteur de configuration comprenant un dispositif de commande intégré d'un chipset, d'un processeur ou d'un système sur puce du dispositif informatique.

10. Procédé selon la revendication 8, la configuration du dispositif de configuration d'éléments comprenant la configuration d'une banque de fusibles programmables dans le champ du dispositif informatique pour activer les zéro ou plusieurs éléments du dispositif informatique identifiés par la liste de demande d'éléments.

11. Procédé selon la revendication 8, comprenant en outre :
la réception, par le moteur de configuration, d'une deuxième liste de demandes d'éléments via l'interface avec le dispositif informatique, la deuxième liste de demandes d'éléments devant identifier un sous-ensemble d'éléments du dispositif informatique identifiés par la liste de demandes d'éléments à activer ;
la configuration, par le moteur de configuration, d'un deuxième dispositif de configuration d'éléments du dispositif informatique pour activer sélectivement le sous-ensemble d'éléments du dispositif informatique identifiés par la deuxième liste de demandes d'éléments ;
la génération, par le moteur de configuration, d'un deuxième reçu numérique en fonction d'une deuxième liste d'éléments activés du dispositif informatique et de l'identifiant unique du dispositif ; et
la signature, par le moteur de configuration, du deuxième reçu numérique à l'aide de la clé unique de dispositif.

12. Procédé selon la revendication 8, les zéro ou plusieurs éléments du dispositif informatique comprenant un ou plusieurs parmi une fréquence de fonctionnement de base, un élément de surcadençage dynamique, une élément de surcadençage de l'utilisateur final, une taille de mémoire cache, un nombre de noyaux de processeur, un élément d'hyperthreading, un élément de support de virtualisation, un élément de gestion ou un élément de support mémoire non volatile.

13. Un ou plusieurs supports de stockage lisibles par machine comprenant une pluralité d'instructions stockées sur ceux-ci qui, en réponse à leur exécution, aboutissent à la réalisation, par un dispositif informatique, du procédé selon l'une quelconque des revendications 8 à 12.
